# EUROPÄISCHE PATENTSCHRIFT

(11) **EP 4 449 086 B1**
(45) Veröffentlichungstag und Bekanntmachung des Hinweises auf die Patenterteilung: **09.09.2026**
(21) Anmeldenummer: 22830422.6
(22) Anmeldetag: 02.12.2022
(51) Int. Cl.: G01M 5/00, G01M 11/08, E04B 1/38, F16B 1/00

(54) **VERFAHREN ZU EINER QUALITÄTSPRÜFUNG EINER BEFESTIGUNG EINER ANKER- ODER MONTAGESCHIENE**
METHOD FOR INSPECTING THE QUALITY OF A FASTENING OF AN ANCHOR OR MOUNTING RAIL
PROCÉDÉ D'INSPECTION DE LA QUALITÉ D'UNE FIXATION D'UN ÉLÉMENT D'ANCRAGE OU D'UN RAIL DE MONTAGE

(30) Priorität: 16.12.2021 DE 102021133384
(43) Veröffentlichungstag der Anmeldung: 23.10.2024
(73) Patentinhaber: fischerwerke GmbH & Co. KG, 72178 Waldachtal (DE)
(72) Erfinder: FREUDIGMANN, Lars, 72072 Tübingen (DE)
(86) Internationale Anmeldenummer: PCT/EP2022/084236
(87) Internationale Veröffentlichungsnummer: WO 2023/110460

(56) Entgegenhaltungen:
- CN-A- 113 313 760
- US-A1- 2009 192 731
- US-A1- 2021 062 844
- US-B2- 10 570 610

## Beschreibung

Die Erfindung betrifft ein Verfahren zu einer Qualitätsprüfung mindestens eines Qualitätskriteriums einer Befestigung einer Anker- oder Montageschiene mit den Merkmalen des Oberbegriffs des Anspruchs 1.

"Qualitätsprüfung" bedeutet eine Ermittlung, ob bei der Befestigung einer Anker- oder Montageschiene und/oder einer Befestigung an einer Anker- oder Montageschiene ein bestimmtes, definiertes und prüfbares Qualitätskriterium erfüllt ist.

Anker- und Montageschienen dienen einer Befestigung von Anbauteilen mittels Hammerkopfschrauben, deren Hammerköpfe in der Anker- oder Montageschiene quergestellt sind oder werden, oder mittels in Ansicht typischerweise rechteckiger oder rautenförmiger sogenannter Schiebemuttern, die in die Anker- oder Montageschiene eingebracht werden. Dabei ist unter einer "Ankerschiene" eine Profilschiene zu verstehen, die in einem Ankergrund aus insbesondere Beton derart versenkt angeordnet wird, dass eine Sichtseite der Ankerschiene bündig mit einer Oberfläche des Ankergrunds ist. Typischerweise weist die Ankerschiene Anker auf, die von einer der Sichtseite gegenüberliegenden Grundseite der Ankerschiene von der Ankerschiene in den Beton abstehen und die Ankerschiene im Ankergrund verankern. Montageschienen werden typischerweise zur Montage von Ver- und Entsorgungsleitungen verwendet und insbesondere abgehängt unter einer Decke eines Gebäudes angebracht. Anker- und Montageschienen sind typischerweise C-Profilschienen.

Das Patent EP 3 514 297 B1 offenbart eine Ankerschiene mit Löchern in einer Quermitte einer Grundseite der Ankerschiene, in denen nach außen von der Ankerschiene abstehende Anker befestigt werden können. Nicht benötigte Löcher werden zum Betonieren mit Stopfen verschlossen, damit kein Beton in die Ankerschiene fließt. Die Stopfen weisen eine Kennung mit einem Identifikationscode für die Ankerschiene auf.

Aufgabe der Erfindung ist, ein Verfahren zu einer Qualitätsprüfung einer Befestigung einer Anker- oder Montageschiene vorzuschlagen.

Die Qualitätsprüfung betrifft eine Einhaltung eines oder mehrerer Qualitätskriterien der Befestigung der und/oder an der Anker- und Montageschiene, wie beispielsweise eine Einhaltung vorgeschriebener Randabstände oder Verankerungstiefen der Ankerschiene und/oder die Verwendung der Anker- und Montageschiene zugeordneter Anbauteile, Bauteilbefestiger wie Hammerkopfschrauben, Schiebemuttern oder Abhänger, oder anderer der Anker- oder Montageschiene zugeordneter Bauteile, und/oder die korrekte Befestigung dieser Bauteile an der Anker- oder Montageschiene. Unter "zugeordneten Bauteilen" sind solche Bauteile zu verstehen, die zu einer Verwendung mit der Anker- oder Montageschiene vorgesehen und/oder zugelassen sind.

Diese Aufgabe wird erfindungsgemäß durch die Merkmale des Anspruchs 1 gelöst. Erfindungsgemäß weist die Anker- oder Montageschiene einen optoelektronisch lesbaren Identifikationscode an einer Sichtseite auf. Ein optoelektronisch lesbarer Identifikationscode lässt sich mit einem geeigneten Lesegerät optisch lesen und elektronisch auswerten oder verarbeiten. Er ermöglicht eine vorzugsweise eindeutige Identifikation der Anker- und Montageschiene. Bekannt und verwendbar sind beispielsweise eindimensionale Identifikationscodes wie Strichcodes beziehungsweise sogenannte Barcodes oder zweidimensionale Identifikationscodes wie beispielsweise QR-Codes. Auch eine Verwendung dreidimensionaler, optoelektronisch lesbarer Identifikationscodes mit beispielsweise Hologrammen ist möglich. Die Aufzählung dient einer Veranschaulichung von optoelektronisch lesbaren Identifikationscodes, die für das erfindungsgemäße Verfahren verwendbar sind. Die Aufzählung ist beispielhaft und nicht abschließend.

Als "Sichtseite" wird eine Seite der Anker- oder Montageschiene bezeichnet, die nach einer Verankerung oder Befestigung der Anker- oder Montageschiene in einer vorgesehenen Weise sichtbar ist. Nach der Verankerung oder Befestigung der Anker- oder Montageschiene in der vorgesehenen Weise ist zumindest der Identifikationscode derart zugänglich beziehungsweise sichtbar, dass er mit einem optoelektronischen Lesegerät gelesen werden kann. Die Anker- oder Montageschiene kann mehrere Sichtseiten aufweisen. Es ist mindestens ein Identifikationscode an mindestens einer Sichtseite der Anker- oder Montageschiene angebracht.

Erfindungsgemäß wird der optoelektronisch lesbare Identifikationscode der Anker- oder Montageschiene mit dem optoelektronischen Lesegerät gelesen und hinsichtlich mindestens eines Qualitätskriteriums, das ebenfalls optoelektronisch erfasst wird, ausgewertet. Es wird also beispielsweise ein Randabstand einer in einem Ankergrund verankerten Ankerschiene mit dem optoelektronischen Lesegerät gemessen und der optoelektronische Identifikationscode der Ankerschiene gelesen. Anhand des Identifikationscodes ermittelt das optoelektronische Lesegerät einen Mindestabstand der Ankerschiene und prüft, ob er eingehalten ist. Der Randabstand ist ein Beispiel eines mit dem erfindungsgemäßen Verfahren prüfbaren Qualitätskriteriums.

Die Erfindung ermöglicht eine rationelle und weitgehend automatische Prüfung einer Einhaltung eines oder mehrerer Qualitätskriterien einer Befestigung einer Anker- oder Montageschiene.

Eine Ausgestaltung der Erfindung sieht vor, dass die Ankerschiene eine Messmarkierung an ihrer Sichtseite aufweist, mit deren Hilfe das optoelektronische Lesegerät bei der Durchführung des erfindungsgemäßen Verfahrens eine Position der Ankerschiene in dem Ankergrund erfasst und auswertet. Das erfasste und ausgewertete Qualitätskriterium ist in diesem Fall ein Positionskriterium, nämlich der Randabstand der Ankerschiene von einem Rand oder auch von zwei aneinanderstoßenden Rändern des Ankergrunds, in dem die Ankerschiene verankert ist. Die Messmarkierung kann beispielsweise ein Strich an der Sichtseite der Ankerschiene sein, mit dessen Hilfe das optoelektronische Lesegerät den Randabstand der Ankerschiene von einem oder mehreren Rändern des Ankergrunds in einer Längsrichtung oder quer zur Ankerschiene erfassen kann. Die Ankerschiene kann mehrere Messmarkierungen in festgelegten Abständen aufweisen, die eine Ermittlung des Randabstands der Ankerschiene von dem oder den Rändern des Ankergrunds ermöglichen. Die Ankerschiene kann eine von dem Identifikationscode unabhängige Messmarkierung aufweisen oder es kann der Identifikationscode oder Bestandteile des Identifikationscodes als Messmarkierung der Ankerschiene verwendet werden. Solche Bestandteile sind beispielsweise Striche eines Strich- oder Barcodes oder Randstriche oder Positionsmarken eines QR-Codes.

Eine Ausgestaltung der Erfindung sieht vor, dass auch der Anker- oder Montageschiene zugeordnete Bauteile einen optoelektronisch lesbaren Identifikationscode aufweisen. Dieser wird ebenfalls mit dem optoelektronischen Lesegerät erfasst und hinsichtlich der Zugehörigkeit des Bauteils zu der Anker- oder Montageschiene ausgewertet. Auf diese Weise lässt sich feststellen, ob ein oder mehrere an der Anker- oder Montageschiene angeordnete oder befestigte Bauteile der Anker- oder Montageschiene zugeordnet sind oder ob Bauteile an der Anker- oder Montageschiene angeordnet oder befestigt worden sind, die nicht zur Verwendung mit der Anker- oder Montageschiene vorgesehen sind. Ein anderes oder weiteres Qualitätskriterium kann ein Endabstand des Bauteils von einem Ende der Anker- oder Montageschiene sein. Das optoelektronische Lesegerät prüft insbesondere, ob der Hammerkopf in der Anker- oder Montageschiene quergestellt ist.

Eine Anbringung von optoelektronisch lesbaren Identifikationscodes und/oder Messmarkierungen an verschiedenen Stellen der Anker- oder Montageschiene und/oder an verschiedenen Stellen eines zugeordneten Bauteils ermöglicht die Erfassung eines oder mehrerer der Identifikationscodes auch dann, wenn andere Identifikationscodes verdeckt sind. Die Anbringung optoelektronisch lesbarer Messmarkierungen an verschiedenen, gleichmäßig oder ungleichmäßig über eine Länge der Ankerschiene verteilten Stellen ermöglicht eine Ermittlung des Randabstands quer zur Ankerschiene an den verschiedenen Stellen.

Ein weiteres, mit dem erfindungsgemäßen Verfahren auswertbares Qualitätskriterium ist eine Auswertung, ob das Bauteil in vorgesehener Weise an der Anker- oder Montageschiene angeordnet oder befestigt ist. Es weist beispielsweise eine Hammerkopfschraube eine Drehlagemarkierung als Messmarkierung auf, anhand der das elektronische Lesegerät eine Ausrichtung eines Hammerkopfs der Hammerkopfschraube optoelektronisch feststellen kann.

Als optoelektronisches Lesegerät sieht eine Ausgestaltung der Erfindung ein Smartphone oder auch einen Tabletcomputer vor, auf dem zur Prüfung und Auswertung der Identifikationscodes der Anker- oder Montageschiene und gegebenenfalls der an ihr befestigten oder angeordneten Bauteile eine App, das heißt eine Anwendungssoftware installiert ist, mit der eine Einhaltung des oder der Qualitätskriterien der Befestigung der Anker- oder Montageschiene und gegebenenfalls der an ihr befestigten Bauteile erfasst und geprüft werden kann. Andere optoelektronische Lesegeräte sind nicht ausgeschlossen.

Eine Ausgestaltung der Erfindung sieht eine Datenbank vor, in der die Anker- oder Montageschiene beziehungsweise verschiedene Anker- oder Montageschienen und der oder den Anker- oder Montageschienen zugeordnete Bauteile, die zugeordneten Identifikationscodes und verschiedene Qualitätskriterien gespeichert sind. Mit Hilfe der Datenbank prüft das optoelektronische Lesegerät die Einhaltung eines oder mehrerer Qualitätskriterien der Befestigung der Anker- oder Montageschiene und gegebenenfalls eines oder mehrerer an ihr angeordneter oder befestigter Bauteile.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in der Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Die einzige Figur zeigt:

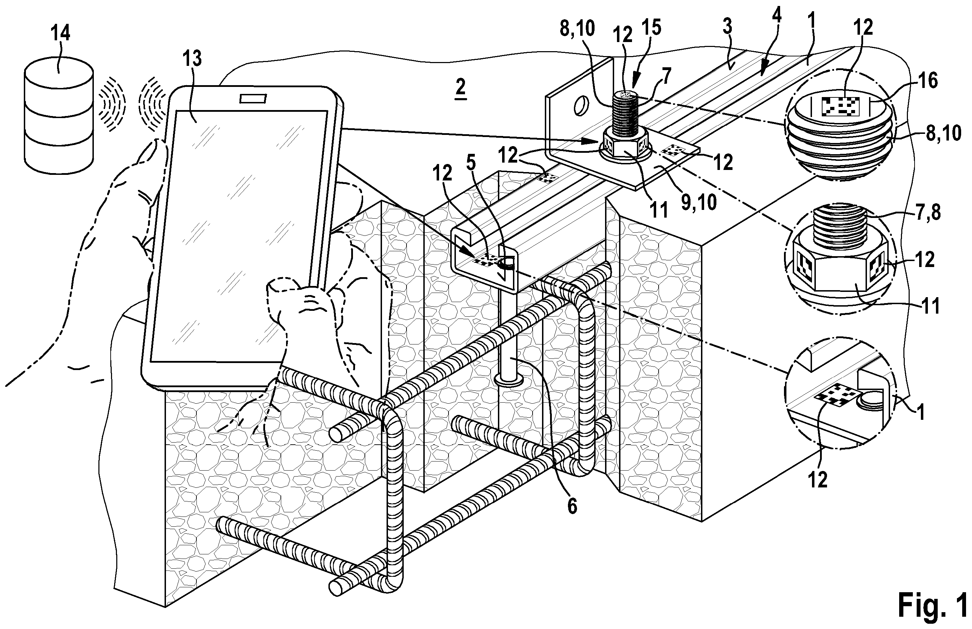

- Figur 1:: Eine in Beton verankerte Ankerschiene in einer perspektivischen, teilweise ausgebrochenen Darstellung zur Erläuterung der Erfindung.

Die in Figur 1 dargestellte Ankerschiene 1 ist in einen Ankergrund 2 aus Beton eingebettet derart, dass eine hier als Sichtseite 3 bezeichnete Seite der Ankerschiene 1 bündig mit einer Oberfläche des Betons beziehungsweise des Ankergrundes 2 ist. Im Ausführungsbeispiel ist die Ankerschiene 1 eine C-Profilschiene mit einem durchgehenden Längsschlitz 4 in der Quermitte der hier als Oberseite 3 bezeichneten Seite. Von einer der Oberseite 3 gegenüberliegenden Seite der Ankerschiene 1, die hier als Grundseite 5 bezeichnet wird, stehen Anker 6 von der Ankerschiene 1 ab, die in den Beton ragen und die Ankerschiene 1 in dem den Ankergrund 2 bildenden Beton verankern.

An der Ankerschiene 1 ist eine Hammerkopfschraube 7 befestigt, deren in der Zeichnung nicht sichtbarer Hammerkopf in einer Längsrichtung der Ankerschiene 1 ausgerichtet durch den Längsschlitz 4 der Ankerschiene 1 in die Ankerschiene 1 eingebracht und durch eine Drehung um 90° in der Ankerschiene 1 quergestellt ist, derart, dass der nicht sichtbare Hammerkopf die Ankerschiene 1 hintergreift.

Die Hammerkopfschraube 7 bildet einen Bauteilbefestiger 15, der zu einer Verwendung mit der Ankerschiene 1, nämlich zu einer Befestigung eines Anbauteils 9 oder eines sonstigen Bauteils 10 an der Ankerschiene 1 vorgesehen ist. Die Hammerkopfschraube 7 kann deswegen auch als ein der Ankerschiene 1 zugeordnetes Bauteil 10 aufgefasst werden. Anstatt mit der Hammerkopfschraube 7 kann ein der Ankerschiene 1 zugeordnetes Bauteil 10 beispielsweise auch mit einer nicht dargestellten sogenannten Schiebemutter an der Ankerschiene 1 befestigt werden, die anstelle der Hammerkopfschraube 7 in der Ankerschiene 1 angeordnet ist beziehungsweise wird. Eine solche Schiebemutter bildet ebenfalls einen Bauteilbefestiger 15 und ein der Ankerschiene 1 zugeordnetes Bauteil 10.

Auf einen Schraubenschaft 8 der Hammerkopfschraube 7, der senkrecht nach außen von der Ankerschiene 1 absteht, ist ein Metallwinkel aufgesetzt, der ein Durchgangsloch für einen Durchtritt des Schraubenschafts 8 aufweist. Der Metallwinkel bildet ein Anbauteil 9 der Ankerschiene 1 und wird hier als der Ankerschiene 1 zugeordnetes Bauteil 10 bezeichnet. "Zugeordnet" bedeutet, dass ein Bauteil 10 zu einer Verwendung mit der Ankerschiene 1 vorgesehen ist. Insbesondere ist ein der Ankerschiene 1 zugeordnetes Bauteil 10 zu einer Anordnung oder Befestigung an der Ankerschiene 1 vorgesehen. Die Ankerschiene 1 kann weitere und/oder andere ihr zugeordnete Bauteile 10 als den Metallwinkel und die Hammerkopfschraube 7 aufweisen, die zu einer Verwendung mit und insbesondere zu einer Anordnung oder Befestigung an der Ankerschiene 1 vorgesehen sind (nicht dargestellt).

Auf den Schraubenschaft 8 ist eine Mutter 11 geschraubt, die den nicht dargestellten Hammerkopf der Hammerkopfschraube 7 von innen und das Anbauteil 9 von außen gegen die Ankerschiene 1 spannt und auf diese Weise die Hammerkopfschraube 7 und das Anbauteil 9 an der Ankerschiene 1 festlegt. Die Mutter 11 ist ebenfalls ein der Ankerschiene 1 zugeordnetes Bauteil 10. Zwischen der Mutter 11 und dem Anbauteil 9 ist eine Unterlegscheibe auf dem Schraubenschaft 8 der Hammerkopfschraube 7 angeordnet.

Die Ankerschiene 1 weist DMC-Codes (DataMatrix-Codes), das heißt zweidimensionale, optoelektronisch lesbare Identifikationscodes 12 auf, die außen an der Sichtseite 3 und innen an der Grundseite 5 der Ankerschiene 1 angebracht sind. Die Identifikationscodes 12 sind so an der Ankerschiene 1 angebracht, dass sie mit einem optoelektronischen Lesegerät 13 lesbar sind, wenn die Ankerschiene 1 wie vorgesehen und dargestellt derart versenkt in dem Ankergrund 2 angeordnet ist, dass die Sichtseite 3 der Ankerschiene 1 bündig mit der Oberfläche des Ankergrundes 2 ist. Es sind auch andere optoelektronisch lesbare Identifikationscodes als ein DMC-Code möglich, beispielsweise eindimensionale Strichcodes (sogenannte Barcodes) oder beispielsweise auch Hologramme oder andere zwei- oder dreidimensionale Identifikationscodes (nicht dargestellt).

Die Ankerschiene 1 weist mehrere identische Identifikationscodes 12 auf, die gleichmäßig oder ungleichmäßig über eine Länge der Ankerschiene 1 verteilt außen auf der Sichtseite 3 und auf einer der Sichtseite 3 zugewandten Innenseite der Grundseite 5 der Ankerschiene 1 angebracht sind. Im Ausführungsbeispiel sind die Identifikationscodes 12 in festgelegten und gleichen Abständen in einer Längsrichtung der Ankerschiene 1 voneinander an der Ankerschiene 1 angebracht. Enden der Ankerschiene 1 nächste Identifikationscodes 12 sind in einem festgelegten Abstand von den Enden der Ankerschiene 1 an der Ankerschiene 1 angebracht. Dadurch dass mehrere Identifikationscodes 12 über die Länge verteilt an der Sichtseite 3 und auf der Innenseite ihrer Grundseite 5 der Ankerschiene 1 angeordnet sind, sind so gut wie immer mehrere Identifikationscodes 12 der Ankerschiene 1 optoelektronisch lesbar, auch wenn mehrere Identifikationscodes 12 von Anbauteilen 9 oder anderen Bauteilen 10 verdeckt sind.

Der Ankerschiene 1 zugeordnete Bauteile 10 weisen ebenfalls Identifikationscodes 12 auf, die im Ausführungsbeispiel ebenfalls QR-Codes sind. Auch an den zugeordneten Bauteilen 10 sind die Identifikationscodes 12 an Stellen angebracht, an denen sie optoelektronisch lesbar sind, wenn die Bauteile 10 wie planmäßig vorgesehen an der Ankerschiene 1 angeordnet beziehungsweise befestigt sind und die Ankerschiene 1 wie vorgesehen in dem Ankergrund 2 versenkt mit ihrer Sichtseite 3 bündig mit der Oberfläche des Ankergrunds 2 verankert ist. So weist beispielsweise die Mutter 11 Identifikationscodes 12 an jeder zweiten ihrer sechs Schlüsselflächen und die Hammerkopfschraube 7 einen Identifikationscode 12 an einer dem Hammerkopf der Hammerkopfschraube 7 fernen Stirnfläche ihres Schraubenschafts 8 auf (siehe Einzelheitvergrößerungen).

Im Ausführungsbeispiel weisen gleiche Bauteile 10 identische Identifikationscodes 12 und unterschiedliche Bauteile 10 unterschiedliche Identifikationscodes 12 auf, wobei die Identifikationscodes 12 der Ankerschiene 1 und die Identifikationscodes 12 der Bauteile 10 ebenfalls unterschiedlich sind. Möglich ist auch, dass jedes Bauteil 10 einen individuellen Identifikationscode 12 aufweist.

Als optoelektronisches Lesegerät 13 wird ein Smartphone verwendet, mit dem die Identifikationscodes 12 optoelektronisch lesbar sind und auf dem eine App, also ein Computerprogramm, gespeichert ist, mit dessen Hilfe die Identifikationscodes 12 ausgewertet werden können. Anstelle eines Smartphones kann beispielsweise auch ein Tabletcomputer als optoelektronisches Lesegerät 13 verwendet werden (nicht dargestellt). Über mobiles Internet steht das optoelektronische Lesegerät 13 mit einer Datenbank 14 in Verbindung, die in der Zeichnung als Schaltzeichen dargestellt ist. In der Datenbank 14 ist die Ankerschiene 1 und sind weitere Ankerschienen und alle den verschiedenen Ankerschienen 1 zugeordnete Bauteile 10 einschließlich ihrer Zuordnungen zu einer oder auch mehreren Ankerschienen 1 gespeichert derart, dass das optoelektronische Lesegerät 13 prüfen kann, ob die an der Ankerschiene 1 angeordneten beziehungsweise befestigten Bauteile 10 der Ankerschiene 1 zugeordnet sind oder nicht. Ebenfalls sind in der Datenbank 14 die den verschiedenen Ankerschienen 1 und den zugeordneten Bauteilen 10 zugeordneten Identifikationscodes 12 und Qualitätskriterien der Befestigung beziehungsweise Verankerung der Ankerschiene 1 in dem Ankergrund 2 und der Anordnung beziehungsweise Befestigung der der Ankerschiene 1 zugeordneten Bauteile 10 an der Ankerschiene 1 gespeichert. Qualitätskriterien der Befestigung der Ankerschiene 1 in dem Ankergrund 2 ist insbesondere ein einzuhaltender Mindest-Randabstand der Ankerschiene 1 von einem Rand des Ankergrunds 2 quer zur Ankerschiene 1 und ein Mindest-Randabstand der Enden der Ankerschiene 1 von Rändern des Ankergrunds 2 in der Längsrichtung der Ankerschiene 1.

Erfindungsgemäß werden nach der Verankerung der Ankerschiene 1 im Ankergrund 2 und der Anordnung oder Befestigung der ihr zugeordneten Bauteile 10 an der Ankerschiene 1 die Identifikationscodes 12 der Ankerschiene 1 und aller an ihr angeordneten und befestigten Bauteile 10 optoelektronisch mit dem Lesegerät 13 gelesen und geprüft, ob die Bauteile 10 der Ankerschiene 1 zugeordnet sind. Möglich ist eine Prüfung der Zugehörigkeit eines Bauteils 10 zu der Ankerschiene 1 auch, bevor das Bauteil 10 an der Ankerschiene 1 angeordnet oder befestigt wird. Die Zugehörigkeit der Bauteile 10 zu der Ankerschiene 1 ist ein Qualitätskriterium der Anordnung oder Befestigung der Bauteile 10 an der Ankerschiene 1.

Des Weiteren wird erfindungsgemäß mindestens ein Qualitätskriterium beziehungsweise eine Einhaltung mindestens eines Qualitätskriteriums der Befestigung der Ankerschiene 1, im Ausführungsbeispiel also der Verankerung der Ankerschiene 1 in dem Ankergrund 2, geprüft. Diese Qualitätskriterien sind insbesondere die Einhaltung der Mindest-Randabstände der Ankerschiene 1 von Rändern des Ankergrunds 2 quer zu der Ankerschiene 1 und in ihrer Längsrichtung. Als weiteres Qualitätskriterium kann eine Parallelität der Ankerschiene 1 zu dem einen Rand des Ankergrunds 2 geprüft werden. Die Qualitätskriterien oder Merkmale der Qualitätskriterien, hier die Ist-Randabstände der Ankerschiene 1 von den Rändern des Ankergrunds 2 und gegebenenfalls die Parallelität der Ankerschiene 1 zu dem einen Rand des Ankergrunds 2, werden ebenfalls optoelektronisch mit dem optoelektronischen Lesegerät 13 erfasst.

Um die Randabstände der Ankerschiene 1 von den Rändern des Ankergrunds 2 optoelektronisch messen zu können, weist die Ankerschiene 1 Messmarkierungen an ihrer Sichtseite 3 und auf der Innenseite ihrer Grundseite 5 auf, mit deren Hilfe eine Position der Ankerschiene 1 optoelektronisch erfasst werden kann. Hierzu werden im Ausführungsbeispiel die Ecken und Randlinien des DMC-Codes verwendet. Bei der Verwendung eines QR-Codes werden die Posititonsmarker der als Identifikationscodes 12 verwendeten QR-Codes als Messmarkierungen verwendet, die QR-Codes an drei ihrer vier Ecken aufweisen. Es können aber auch spezielle Messmarkierungen zusätzlich zu den Identifikationscodes 12 an der Ankerschiene 1 angebracht sein (nicht dargestellt). Weil die Identifikationscodes 12, die die Messmarkierungen zur optoelektronischen Erfassung der Position der Ankerschiene 1 aufweisen, in festgelegten Abständen an der Ankerschiene 1 angebracht sind, lässt sich aus dem optoelektronisch erfassten Abstand der Messmarkierungen der Ankerschiene 1 der Abstand der Ankerschiene 1 von den Rändern des Ankergrunds 2 berechnen und die Einhaltung der Mindest-Randabstände quer zu der Ankerschiene 1 und in der Längsrichtung der Ankerschiene 1 als Qualitätskriterien der Befestigung beziehungsweise Verankerung der Ankerschiene 1 feststellen.

Zusätzlich zum Identifikationscode 12 weist die Hammerkopfschraube 7 eine Drehlagemarkierung 16 auf, mit der das optoelektronische Lesegerät 13 eine Drehlage der Hammerkopfschraube 7 erkennen kann. "Drehlage" bedeutet insbesondere, ob der Hammerkopf der Hammerkopfschraube 7 quer zur Ankerschiene 1 angeordnet ist, das heißt die Ankerschiene 1 hintergreift, oder nicht. Bei der Prüfung der Zugehörigkeit der Hammerkopfschraube 7 zu der Ankerschiene 1 prüft das optoelektronische Lesegerät 13 anhand der Drehlagemarkierung 16 auch die Drehlage der Hammerkopfschraube 7 in Bezug zur Ankerschiene 1. Steht der Hammerkopf der Hammerkopfschraube 7 nicht quer zur Ankerschiene 1, gibt das Lesegerät 13 eine optische und/oder akustische Warnung.

Im Ausführungsbeispiel weist die Hammerkopfschraube 7 zwei zueinander parallele Striche an gegenüberliegenden Seiten des als Identifikationscode 12 an der Hammerkopfschraube 7 angebrachten DMC-Codes als Drehlagemarkierung 16 auf. Es sind andere Drehlagemarkierungen 16 möglich und es kann gegebenenfalls auch der Identifikationscode 12 selbst als Drehlagemarkierung 16 verwendet werden, sofern der verwendete Identifikationscode 12 eine Erkennung seiner Drehlage ermöglicht. Die Drehlage eines DMC-Codes ist anhand seiner vier Ecken oder anhand von Randlinien erkennbar.

Anstelle der Ankerschiene 1 kann die erfindungsgemäße Qualitätsprüfung beispielsweise auch an einer Montageschiene als Schiene durchgeführt werden (nicht dargestellt). Eine Montageschiene ist typischerweise ebenfalls eine C-Profilschiene, die allerdings nicht in einem Ankergrund 2 verankert, sondern beispielsweise abgehängt unter einer Decke befestigt wird. Einer Montageschiene sind Befestiger beziehungsweise sogenannte Abhänger, mit denen die Montageschiene abgehängt unter der Decke befestigt wird, Hammerkopfschrauben als Bauteilbefestiger und Anbauteile als zugeordnete Bauteile zugeordnet (nicht dargestellt).

## Patentansprüche

1. Verfahren zu einer Qualitätsprüfung mindestens eines Qualitätskriteriums einer Befestigung einer Anker- oder Montageschiene (1) und/oder einer Befestigung eines zugeordneten Bauteils (10) an der Anker- oder Montageschiene (1), wobei die Anker- oder Montageschiene (1) einen optoelektronisch lesbaren Identifikationscode (12) an einer Sichtseite (3) aufweist, die zu einem optoelektronischen Lesen des Identifikationscodes (12) zugänglich ist, wenn die Anker- oder Montageschiene (1) in vorgesehener Weise befestigt ist, **dadurch gekennzeichnet, dass** der Identifikationscode (12) mit Hilfe eines optoelektronischen Lesegeräts (13) gelesen und hinsichtlich des mindestens einen Qualitätskriteriums ausgewertet wird, das ebenfalls optoelektronisch erfasst wird, wobei die Ankerschiene (1) in einem Ankergrund (2) verankert ist und eine optoelektronisch lesbare Messmarkierung an ihrer Sichtseite (3) aufweist, mit deren Hilfe das optoelektronische Lesegerät (13) eine Position der Ankerschiene (1) in dem Ankergrund (2) erfasst und das Qualitätskriterium ein Positionskriterium für die Ankerschiene (1) in dem Ankergrund (2) ist, und/oder
wobei ein der Anker- oder Montageschiene (1) zugeordnetes Bauteil (10) einen optoelektronisch lesbaren Identifikationscode (12) aufweist, der zu einem optoelektronischen Lesen des Identifikationscodes (12) zugänglich ist, wenn die Ankerschiene (1) in vorgesehener Weise im Ankergrund (2) verankert ist und das der Anker- oder Montageschiene (1) zugeordnete Bauteil (10) in vorgesehener Weise an der Anker- oder Montageschiene (1) angeordnet oder befestigt ist, und dass die Identifikationscodes (12) mit dem optoelektronischen Lesegerät (13) gelesen und eine Zusammengehörigkeit der Anker- oder Montageschiene (1) und des Bauteils (10) anhand der Identifikationscodes (12) geprüft wird.

2. Verfahren nach Anspruch 1, **dadurch gekennzeichnet, dass** die Anker- oder Montageschiene (1) mehrere optoelektronisch lesbare Identifikationscodes (12) und/oder optoelektronisch lesbare Messmarkierungen aufweist.

3. Verfahren nach einem oder mehreren der vorhergehenden Ansprüche, **dadurch gekennzeichnet, dass** das der Anker- oder Montageschiene (1) zugeordnete Bauteil (7, 10) eine optoelektronisch lesbare Drehlagemarkierung (16) aufweist und dass eine Drehlage des an der Anker- oder Montageschiene (1) angeordneten oder befestigten Bauteils (10) in Bezug zur Ankerschiene (1) mit dem optoelektronischen Lesegerät (13) erfasst und hinsichtlich mindestens eines Qualitätskriteriums ausgewertet wird.

4. Verfahren nach einem oder mehreren der vorhergehenden Ansprüche, **dadurch gekennzeichnet, dass** ein Smartphone oder ein Tabletcomputer als optoelektronisches Lesegerät (13) und zur Qualitätsprüfung eine auf dem optoelektronisches Lesegerät (13) installierte Software verwendet wird.

5. Verfahren nach einem oder mehreren der vorhergehenden Ansprüche, **dadurch gekennzeichnet, dass** die Anker- oder Montageschiene (1) und zugeordnete Bauteile (10) betreffende Daten in einer Datenbank (14) hinterlegt sind, auf die zur Durchführung des Verfahrens zugegriffen wird.

## Claims

1. Method for inspecting the quality of at least one quality criterion of a fastening of an anchor or mounting rail (1) and/or of a fastening of an associated component (10) to the anchor or mounting rail (1), wherein the anchor or mounting rail (1) has an optoelectronically readable identification code (12) on a visible side (3) which is accessible for optoelectronically reading the identification code (12) when the anchor or mounting rail (1) is fastened in the intended manner,
**characterized in that** the identification code (12) is read by means of an optoelectronic reading device (13) and evaluated with respect to the at least one quality criterion, which is likewise detected optoelectronically,
wherein the anchor rail (1) is anchored in an anchoring base (2) and has an optoelectronically readable measuring marking on its visible side (3), by means of which the optoelectronic reading device (13) detects a position of the anchor rail (1) in the anchoring base (2) and the quality criterion is a position criterion for the anchor rail (1) in the anchoring base (2), and/or
wherein a component (10) associated with the anchor or mounting rail (1) has an optoelectronically readable identification code (12) which is accessible for optoelectronically reading the identification code (12) when the anchor rail (1) is anchored in the intended manner in the anchoring base (2) and the component (10) associated with the anchor or mounting rail (1) is arranged on or fastened to the anchor or mounting rail (1) in the intended manner, and **in that** the identification codes (12) are read with the optoelectronic reading device (13) and an association between the anchor or mounting rail (1) and the component (10) is checked on the basis of the identification codes (12).

2. Method according to Claim 1, **characterized in that** the anchor or mounting rail (1) has a plurality of optoelectronically readable identification codes (12) and/or optoelectronically readable measuring markings.

3. Method according to one or more of the preceding claims, **characterized in that** the component (7, 10) associated with the anchor or mounting rail (1) has an optoelectronically readable rotational position marking (16) and **in that** a rotational position of the component (10) arranged on or fastened to the anchor or mounting rail (1) relative to the anchor rail (1) is detected with the optoelectronic reading device (13) and evaluated with respect to at least one quality criterion.

4. Method according to one or more of the preceding claims, **characterized in that** a smartphone or a tablet computer is used as the optoelectronic reading device (13) and software installed on the optoelectronic reading device (13) is used for the quality inspection.

5. Method according to one or more of the preceding claims, **characterized in that** data relating to the anchor or mounting rail (1) and associated components (10) are stored in a database (14) which is accessed for carrying out the method.

## Revendications

1. Procédé de contrôle qualité d'au moins un critère de qualité d'une fixation d'un rail d'ancrage ou de montage (1) et/ou d'une fixation d'un composant associé (10) au rail d'ancrage ou de montage (1), le rail d'ancrage ou de montage (1) présentant un code d'identification (12) lisible optoélectroniquement sur une face visible (3) qui est accessible pour une lecture optoélectronique du code d'identification (12) lorsque le rail d'ancrage ou de montage (1) est fixé de la manière prévue, **caractérisé en ce que** le code d'identification (12) est lu à l'aide d'un dispositif de lecture optoélectronique (13) et évalué en ce qui concerne l'au moins un critère de qualité, qui est également détecté optoélectroniquement,
le rail d'ancrage (1) étant ancré dans un fond d'ancrage (2) et présentant un marquage de mesure lisible optoélectroniquement sur sa face visible (3), à l'aide duquel le dispositif de lecture optoélectronique (13) détecte une position du rail d'ancrage (1) dans le fond d'ancrage (2) et le critère de qualité étant un critère de position pour le rail d'ancrage (1) dans le fond d'ancrage (2), et/ou un composant (10) associé au rail d'ancrage ou de montage (1) présentant un code d'identification (12) lisible optoélectroniquement qui est accessible pour une lecture optoélectronique du code d'identification (12) lorsque le rail d'ancrage (1) est ancré de la manière prévue dans le fond d'ancrage (2) et que le composant (10) associé au rail d'ancrage ou de montage (1) est disposé ou fixé de la manière prévue au rail d'ancrage ou de montage (1), et que les codes d'identification (12) sont lus par le dispositif de lecture optoélectronique (13) et qu'une appartenance mutuelle du rail d'ancrage ou de montage (1) et du composant (10) est vérifiée sur la base des codes d'identification (12).

2. Procédé selon la revendication 1, **caractérisé en ce que** le rail d'ancrage ou de montage (1) présente plusieurs codes d'identification (12) lisibles optoélectroniquement et/ou des marquages de mesure lisibles optoélectroniquement. aufweist.

3. Procédé selon une ou plusieurs des revendications précédentes, **caractérisé en ce que** le composant (7, 10) associé au rail d'ancrage ou de montage (1) présente un marquage de position angulaire (16) lisible optoélectroniquement et qu'une position angulaire du composant (10) disposé ou fixé au rail d'ancrage ou de montage (1) par rapport au rail d'ancrage (1) est détectée par le dispositif de lecture optoélectronique (13) et évaluée en ce qui concerne au moins un critère de qualité.

4. Procédé selon une ou plusieurs des revendications précédentes, **caractérisé en ce qu'**un smartphone ou une tablette tactile est utilisé(e) comme dispositif de lecture optoélectronique (13) et qu'un logiciel installé sur le dispositif de lecture optoélectronique (13) est utilisé pour le contrôle qualité.

5. Procédé selon une ou plusieurs des revendications précédentes, **caractérisé en ce que** des données concernant le rail d'ancrage ou de montage (1) et les composants associés (10) sont enregistrées dans une base de données (14) à laquelle il est accédé pour la mise en œuvre du procédé.
